# FASCICULE DE BREVET EUROPEEN

(11) **EP 0 885 362 B1**
(45) Date de publication et mention de la délivrance du brevet: **03.09.2003**
(21) Numéro de dépôt: 97952966.6
(22) Date de dépôt: 19.12.1997
(51) Int. Cl.: F16H 25/20, F16H 35/10, F16D 7/02

(54) **LIMITEUR DE FORCE DEBRAYABLE POUR VERIN ELECTRIQUE LINEAIRE A VIS**
ENTKOPPELBARER KRAFTBESCHRÄNKER FÜR ELEKTRISCHEN SPINDELANTRIEB MIT SCHRAUBENGETRIEBE
DISENGAGEABLE FORCE REGULATOR FOR LINEAR ELECTRIC SCREWJACK

(30) Priorité: 19.12.1996 FR 9616082
(43) Date de publication de la demande: 23.12.1998
(73) Titulaire: Waligora, Laurent, 36100 Issoudun (FR); Waligora, Julien, 36100 Issoudun (FR)
(72) Inventeur: Waligora, Laurent, 36100 Issoudun (FR); Waligora, Julien, 36100 Issoudun (FR)
(74) Mandataire: Potdevin, Emmanuel Eric
(86) Numéro de dépôt international: FR9702373
(87) Numéro de publication internationale: WO98027365

(56) Documents cités:
- DE-A- 2 363 691
- DE-A- 4 237 385
- DE-C- 19 617 875
- GB-A- 2 185 731
- US-A- 3 858 452
- US-A- 4 660 428
- US-A- 5 125 280

## Description

La présente invention concerne un dispositif mécanique permettant de :
- limiter la force d'un vérin électrique linéaire à système vis/écrou réversible,
- limiter la force statique supportée par le vérin à l'arrêt,
- débrayer la vis du vérin de son système d'entraînement pour la rendre libre en translation.

La solution employée actuellement consiste à désaccoupler le système vis/écrou réversible de son moteur d'entraînement par l'intermédiaire d'un crabotage commandé extérieurement ou par un levier dont le mouvement est une fonction de la force axiale appliquée sur la vis du vérin.

Un dispositif mécanique extérieur situé entre la charge et la vis du vérin actionne le levier quand la force dépasse une valeur pré-établie. Les inconvénients de ce système sont :
- l'usure rapide du dispositif de crabotage.
- l'usure de chaque élément du dispositif a une influence sur le réglage qui doit être retouché régulièrement,
- le dispositif qui actionne le levier nécessite un déplacement axial important , ce qui occasionne une imprécision du positionnement de la charge liée au vérin,
- il ne fonctionne que dans un seul sens,
- sa réalisation est complexe.

Le dispositif selon l'invention permet de remédier à ces inconvénients.

DE 4 237 385 décrit un dispositif selon le préambule des revendication 1 et 4 on prévoit selon l'invention un dispositif selon la revendication 1 et un dispositif selon la revendication 4 pour remédier aux problèmes précédement cités.

Dans un mode de réalisation, ce dispositif comprend deux pièces, l'une solidaire de la vis du vérin et l'autre solidaire de la charge pouvant tourner l'une part rapport à l'autre sur le même axe. Le mouvement de translation axial entre ces deux pièces ne peut pas avoir lieu.

Entre ces deux pièces, est disposé un système de friction. Au repos, la rotation des deux pièces par rapport à l'autre est empêchée par ce système de friction. La vis du vérin est donc rendue solidaire de la charge, ceci bloque la rotation de cette vis et crée un couple de torsion sur le système de friction quand le vérin fonctionne.

Deux cas de fonctionnement se présentent :

### 1. Limiteur de force dynamique du vérin quand celui-ci entraîne la charge :

Le couple de frottement entre la vis et l'écrou tend à entraîner la vis en rotation. Cette rotation est empêchée jusqu'à ce que le système de friction glisse et désolidarise la vis de la charge qui n'est plus entraînée en translation.
Ceci produit donc une limitation de la force du vérin.

### 2. Limiteur de force statique supportée par le vérin quand celui-ci n'entraîne pas la charge :

Le dispositif utilise la réversibilité du système vis/écrou.

On appelle réversibilité le fait que, sous l'action d'une force axiale sur l'un des éléments vis ou écrou, l'autre, bloqué dans la direction axiale, entre en rotation. La force appliquée par la charge dans l'axe de la vis tend à entraîner celle-ci en rotation. Cette rotation est empêchée jusqu'à ce que le système de friction glisse et désolidarise la vis de la charge.

La rotation de la vis fait progresser celle-ci dans l'écrou et entraîne un déplacement linéaire de la charge.

Ce dispositif fonctionne aussi bien en traction qu'en compression.

Le système de friction employé peut être un dispositif à billes, à disques de frottement, à aimants permanents multipolaires ou autre.

Dans le cas où le vérin possède des butées permettant de couper l'alimentation du moteur d'entraînement lorsque la fin de course est atteinte, le dispositif selon l'invention implique l'utilisation de butées de fin de course dont le fonctionnement est symétrique autour de l'axe du vérin, car la vis tourne.

Ces butées assurent la même course totale de la vis tournante quelle que soit la position angulaire de celle-ci.

Selon des modes particuliers de réalisation, les butées de fin de course peuvent être composées :
- d'une pièce mécanique circulaire associée à un rupteur électrique, un détecteur optique ou pneumatique entre autres.
- d'un aimant annulaire associé à un détecteur magnétique à contacts secs ou à effet « Hall » utilisant un semi-conducteur entre autres.

Les dessins annexés illustrent l'invention :
La figure 1 représente en coupe, le dispositif selon l'invention.
La figure 2 représente en coupe, une première variante de ce dispositif.
La figure 3 représente en coupe, une seconde variante de ce dispositif.
La figure 4 représente en coupe, une variante du dispositif selon la figure 2.
La figure 5 représente en coupe, une troisième variante du dispositif selon la figure 1 ne faisant pas partie de l'invention.

En référence à ces dessins, le vérin lui-même, simplifié pour permettre la compréhension de l'invention, comporte un corps (15) qui enferme un écrou (8) bloqué suivant l'axe entre deux butées à roulement (12). Cet écrou est entraîné en rotation à l'aide d'un moteur (11) par l'intermédiaire d'un engrenage à deux pignons (9) et (10). L'écrou (8) entraîne la vis (7) ce qui transforme le mouvement de rotation de l'écrou en mouvement de translation de cette vis. La charge (17), actionnée par le vérin ne peut subir qu'un mouvement de translation par rapport au corps (15) fixé sur une structure. La pièce (1), solidaire de la charge, est de ce fait bloquée en rotation par rapport au corps (15). A l'arrêt du vérin, l'écrou (8) est bloqué en rotation par un dispositif électromécanique approprié.

Selon des modes particuliers de réalisation :
- Le vérin peut être équipé d'un système vis (7)/ écrou (8) à billes ou à filet de forme quelconque avec un pas rapide pour favoriser la réversibilité.
- La vis (7) et l'écrou (8) peuvent être intervertis, l'écrou se déplaçant en translation entraîné par la vis tournante. Dans ce cas, la vis (7) et l'écrou (8) doivent être intervertis dans toute la description du dispositif selon l'invention.

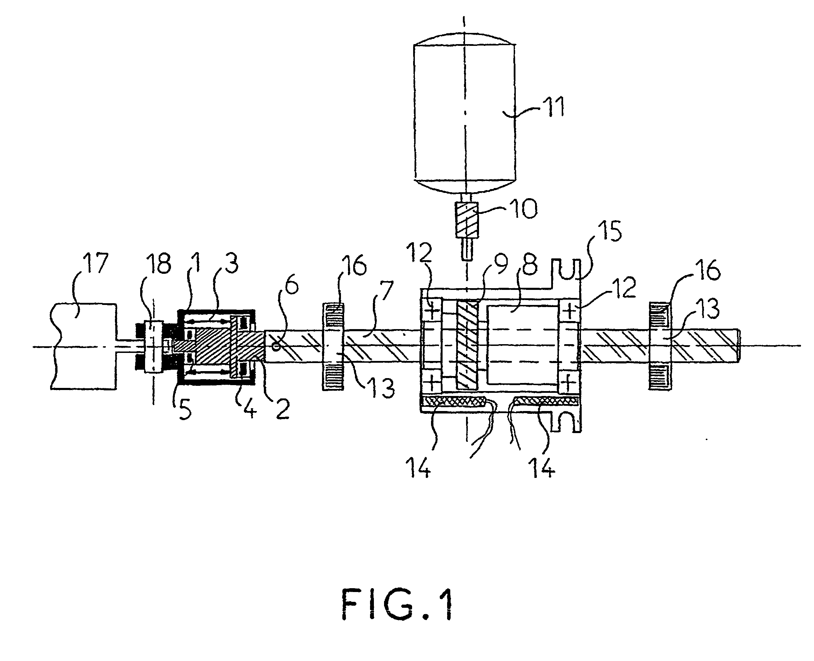

En référence à la figure 1, le dispositif selon l'invention comporte une pièce (2) rendue solidaire de la vis (7) du vérin à l'aide d'un élément d'assemblage (6) et d'une pièce (1) solidaire de la charge (17) par l'intermédiaire de la goupille (18). Ces deux pièces (1) et (2) peuvent tourner l'une par rapport à l'autre autour du même axe, mais ne peuvent pas se déplacer en translation l'une par rapport à l'autre suivant cet axe. Elles peuvent être concentriques et circulaires, l'une des deux formant un capot de protection autour du dispositif complet.

Un système de friction (3) qui agit en limiteur de couple de torsion prend place entre les pièces (1) et (2), il assure la liaison entre ces deux pièces . Le système de friction (3) est donc soumis à un couple de torsion par le fait qu'il bloque la rotation de la vis (7).

Deux cas de fonctionnement se présentent :

### 1. Limiteur de force dynamique du vérin quand celui-ci entraîne la charge (17):

Le couple de frottement entre la vis (7) et l'écrou (8) tend à entraîner la vis en rotation. Cette rotation est empêchée jusqu'à ce que le système de friction (3) glisse et désolidarise les pièces (1) et (2). La valeur de la force à partir de laquelle la rotation se produit est une fonction du réglage du système de friction.

### 2. Limiteur de force statique supportée par le vérin quand celui-ci n'entraîne pas la charge (17) :

Le dispositif utilise la réversibilité du système vis (7) / écrou (8). La force appliquée par la charge (17) dans l'axe de la vis (7) tend à visser celle-ci dans l'écrou (8). Ceci engendre un couple de torsion sur la pièce (2) transmis à la pièce (1) par l'intermédiaire du système de friction (3).
La rotation de la vis (7) est empêchée jusqu'à ce que le système de friction (3) glisse et désolidarise les pièces (1) et (2).
La valeur de la force à partir de laquelle la rotation se produit est une fonction du réglage du système de friction.

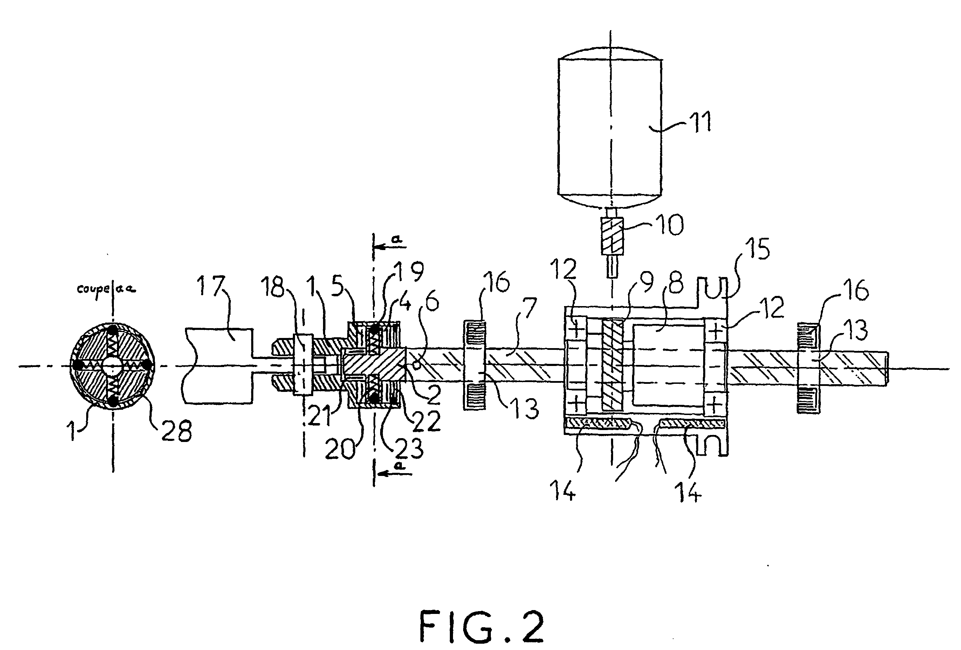

Dans la forme de réalisation suivant la figure 2, le système de friction (3) quelconque est remplacé par un système de friction à billes. Le dispositif comporte une pièce (2) rendue solidaire de la vis (7) du vérin à l'aide d'une goupille (6) par exemple et une pièce (1) solidaire de la charge (17) actionnée par le vérin.

Ces deux pièces sont concentriques et peuvent tourner l'une par rapport à l'autre autour du même axe.

Un ensemble composé des butées à roulement (4) et (5), du palier à roulement (21) et de la contre-plaque (23) arrêtée par l'anneau élastique (22) permet la rotation entre les pièces (1) et (2), tout en transmettant les efforts axiaux.

La pièce (2) comporte un ou plusieurs trous borgnes dans chacun desquels coulisse une bille (19) poussée par un ressort (20). La pièce (1) comporte des encoches (28), dont le nombre peut être supérieur au nombre de billes (19), dans lesquelles viennent se loger ces billes.

Deux cas de fonctionnement se présentent :

### 1. Limiteur de force dynamique du vérin quand celui-ci entraîne la charge :

Le couple de frottement entre la vis (7) et l'écrou (8) tend à entraîner ladite vis en rotation. Ceci engendre un couple de torsion sur la pièce (2) transmis à la pièce (1) par l'intermédiaire des billes (19) poussées par les ressorts (20).

La rotation de la vis (7) est empêchée jusqu'à ce que les billes (19) s'échappent des encoches (28) en comprimant les ressorts (20) sous l'action du couple de torsion.

La valeur de la force à partir de laquelle la rotation se produit est une fonction du rendement du système vis (7) / écrou (8), de la valeur de la raideur des ressorts (20) ainsi que de la forme et des dimensions des éléments qui constituent le dispositif.

### 2. Limiteur de force statique supportée par le vérin quand celui-ci n'entraîne pas la charge :

Le dispositif utilise la réversibilité du système vis/écrou.

La force axiale s'exerçant sur la vis (7) tend à visser celle-ci dans l'écrou (8). Ceci engendre un couple de torsion sur la pièce (2) transmis à la pièce (1) par l'intermédiaire des billes (19) poussées par les ressorts (20).

La rotation de la vis (7) est empêchée jusqu'à ce que les billes (19) s'échappent des encoches (28) en comprimant les ressorts (20) sous l'action du couple de torsion.

La valeur de la force à partir de laquelle la rotation se produit est une fonction du rendement du système vis (7) / écrou (8), de la valeur de la raideur des ressorts (20) ainsi que de la forme et des dimensions des éléments qui constituent le dispositif.

Selon des modes particuliers de réalisation :
- Les billes (19) peuvent être remplacées par des rouleaux, des coins, ou des patins de toutes formes.
- Les pièces (1) et (2) peuvent être interverties, les encoches (28) se trouvant alors sur la pièce (2).

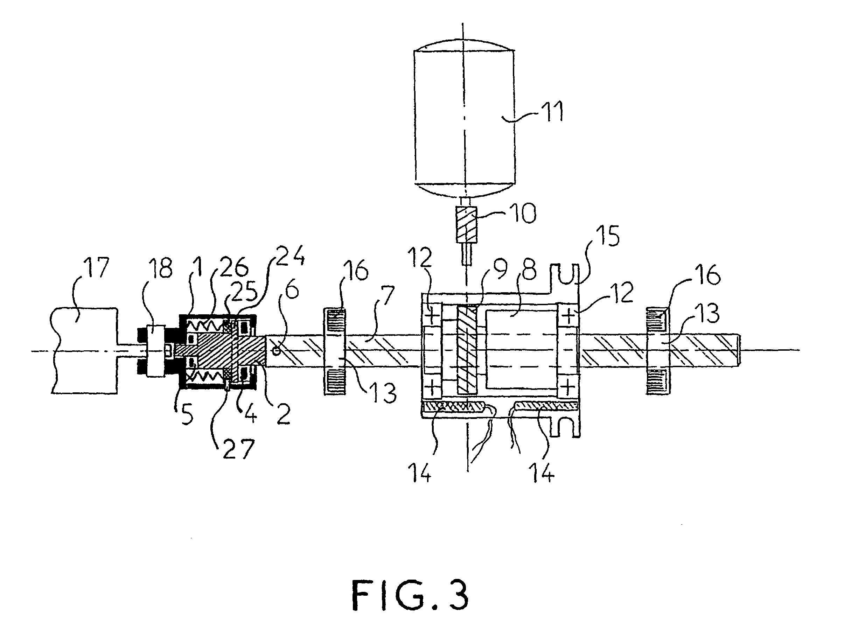

Dans la forme de réalisation suivant la figure 3, le système de friction (3) quelconque est remplacé par un système de friction à disques.

La pièce (2) solidaire de la vis (7) du vérin comporte un disque (24). La pièce (1) solidaire de la charge (17) comporte un disque (25), pouvant se déplacer suivant l'axe, plaqué contre le disque (24) par le ressort (26). Le disque (25) ne peut pas tourner par rapport à la pièce (1), la goupille (27) bloquant sa rotation. Les pièces (1) et (2) peuvent tourner l'une par rapport à l'autre autour du même axe.
Les butées à rouleaux (4) et (5) permettent la rotation de la pièce (2) par rapport à la pièce (1) tout en transmettant les efforts axiaux.

Le moment du couple à partir duquel le glissement des disques (24) et (25) l'un sur l'autre se produit est une fonction de la raideur du ressort (26), des coefficients de frottement des disques et de leur surface.

Les deux cas de fonctionnement sont identiques à ceux de la forme de réalisation suivant la figure 1.

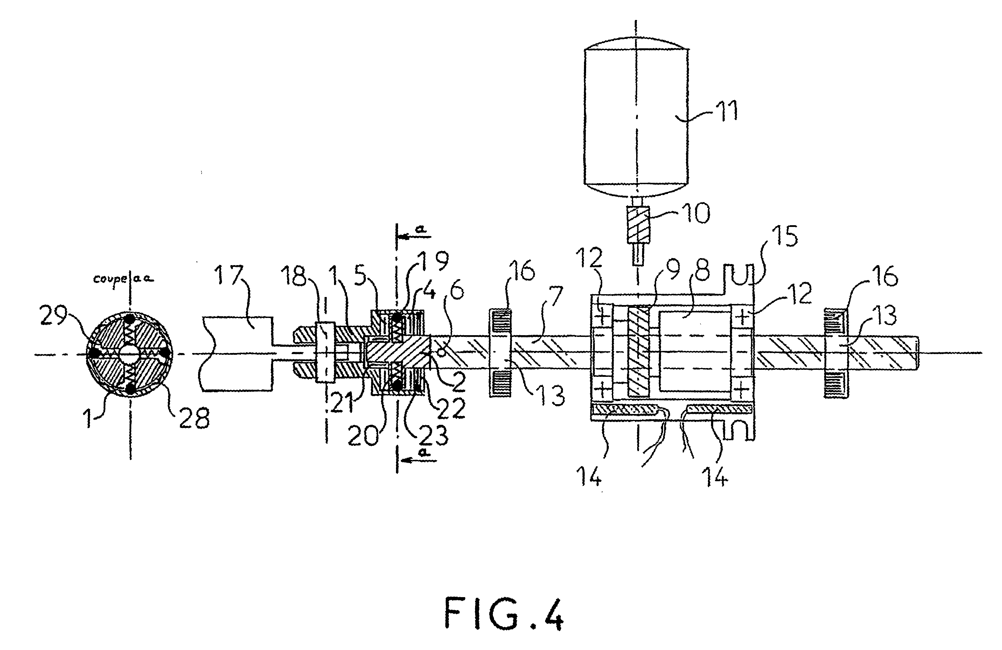

La forme de réalisation suivant la figure 4 dérive de celle suivant la figure 2. Le dispositif est modifié de façon à limiter la force appliquée sur la vis (7) du vérin dans un seul sens seulement. Dans l'autre sens, le dispositif se bloque et n'apporte aucune limitation de la force. Des logements (29) taillés dans la pièce (2) permettent aux billes (19), poussées par les ressorts (20), de se déplacer tangentiellement à la pièce (2) et dans un seul sens lorsque la rotation entre les pièces (1) et (2) commence à se produire. Les billes (19) s'engagent alors dans les logements (29), elles ne peuvent plus se déplacer radialement dans la pièce (2) et les ressorts (20) ne peuvent plus être comprimés.

La profondeur des logements (29) est telle que les billes (19) restent enclenchées dans les encoches (28) et empêchent la libre rotation entre les pièces (1) et (2) :
- la force dynamique n'est plus limitée dans le sens axial correspondant à la position des logements (29) quand le vérin entraîne la charge (17),
- la force statique supportée n'est plus limitée dans le sens axial correspondant à la position des logements (29) quand le vérin n'entraîne pas la charge.

Lorsque le couple de torsion diminue et change de sens le dispositif se déverrouille, les billes (19) reviennent dans l'axe des ressorts (20) qui peuvent à nouveau être comprimés. Le dispositif se comporte alors comme celui de la figure 2 et agit en limiteur de force.

Les logements (29) peuvent être taillés d'un coté ou de l'autre des billes (19) suivant le sens de blocage souhaité. Leur nombre peut être égal ou inférieur au nombre de billes. Ces logements sont tous réalisés dans le même sens.

Le dispositif de la figure 1 peut-être modifié de façon à le transformer en système de débrayage de la tige du vérin . Dans cette variante le système de friction (3) est remplacé par un embrayage. Cet embrayage associé à une commande extérieure permet de :
- rendre solidaire les pièces (1) et (2) si la commande de débrayage n'est pas actionnée. Le vérin peut alors pousser ou tirer la charge (17) avec toute la force nécessaire.
- Désolidariser brusquement les pièces (1) et (2) si la commande de débrayage est actionnée. Ceci rend la vis (7) totalement libre en rotation et en translation par rapport à l'écrou (8) car le système vis (7)/écrou (8) est réversible. La vis (7) et la charge (17) qui lui est rattachée sont alors libres en translation le long de leur axe par rapport au corps (15) du vérin.

Sous l'effet d'une force axiale extérieure appliquée sur la charge (17), la vis(7) tourne et se déplace en translation dans l'écrou (8) grâce à la réversibilité.
Les fonctions de limiteur de force et de débrayage de la vis (7) peuvent être combinées dans un même boîtier afin d'obtenir un vérin à force limitée et à vis (7) débrayable en translation par rapport au corps (15) dans le cas d'une coupure de l'alimentation électrique de son moteur par exemple.

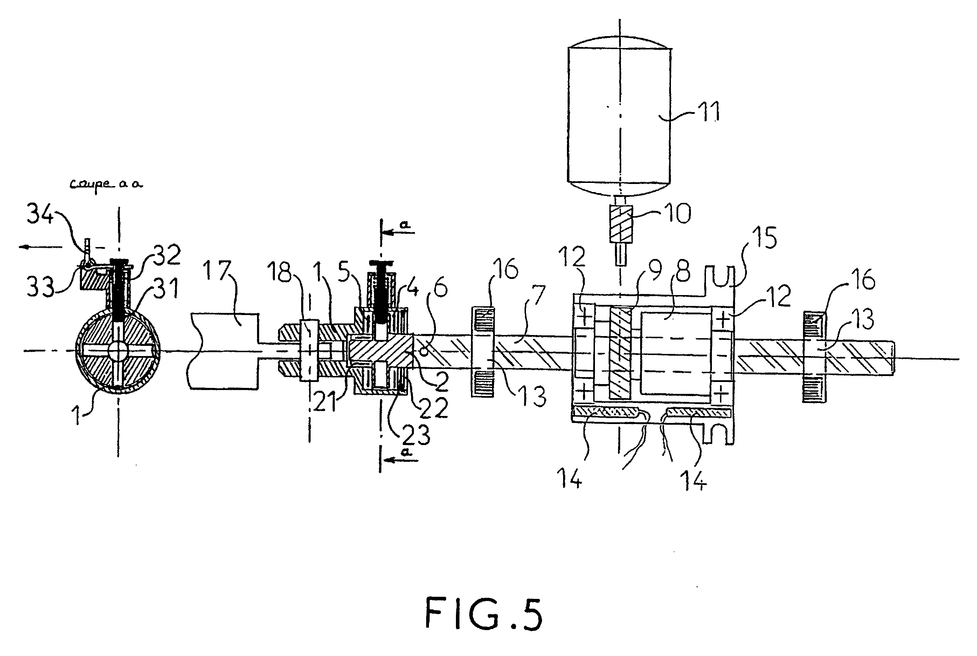

Dans la forme de réalisation suivant la figure 5 l'embrayage est constitué d'un doigt de verrouillage (31) poussé par un ressort (32). Ce doigt rend les pièces (1) et (2) solidaires au repos. Une action sur le levier (34), articulé autour de l'axe (33) lui-même fixé sur la pièce (1), soulève le doigt de verrouillage (31) en comprimant le ressort (32) et rend les pièces (1) et (2) libres en rotation l'une par rapport à l'autre. Dans ce cas, la vis (7) est libre en rotation et peut se visser ou se dévisser librement dans l'écrou (8).

Selon des modes particuliers de réalisation, l'action sur le levier (34) peut se faire manuellement ou par tout organe de commande électromécanique, pneumatique ou mécanique.

Le fonctionnement des deux butées de fin de course (13), solidaires de la vis (7), est symétrique autour de l'axe de la vis (7), c'est à dire quelque soit la position angulaire de ladite vis.

Ces butées (13) peuvent être constituées :
- d'un aimant annulaire (16) à champ axial qui commande sans contact un détecteur (14) sensible au champ magnétique du type contacts secs sous ampoule de verre, détecteur à effet « Hall » ou autre.
- d'une pièce mécanique circulaire qui commande un détecteur (14) du type rupteur électrique, détecteur optique ou pneumatique entre autres.

Les détecteurs (14) situés dans le corps (15) du vérin génèrent un signal qui peut être utilisé pour commander l'arrêt du moteur (11) lorsque la fin de course est atteinte.

Ces butées de fin de course (13) sont de forme circulaire.

## Revendications

1. Dispositif de limitation de force pour vérin électrique linéaire à système vis-écrou adapté pour actionner en translation une charge (17), **caractérisé en ce que** le système vis écrou soit reversible et que le dispositif comprend une premiére pièce (1) solidaire de la charge (17) et une deuxième pièce (2) solidaire de la vis (7) du vérin, ladite première pièce (1) et ladite deuxième pièce (2) étant montées pour pouvoir tourner l'une par rapport à l'autre sur un même axe, ainsi qu'un système de friction (3) disposé entre ladite première pièce (1) et ladite deuxième pièce (2) de manière à assurer la liaison de ladite première pièce (1) et de ladite deuxième pièce (2) au repos mais à glisser à partir d'un certain couple de torsion engendré par le fait que ce système de friction (3) empêche la rotation de la vis.

2. Dispositif selon la revendication 1, **caractérisé en ce qu'**il empêche la rotation de la vis (7) par rapport à la charge (17), engendrée par le couple de frottement entre la vis (7) et l'écrou (8), jusqu'à ce que le système de friction glisse et désolidarise la vis (7) de ladite première pièce (1) solidaire de la charge (17), de sorte que la force du vérin est limitée quand celui-ci actionne la charge (17).

3. Dispositif selon la revendication 1, **caractérisé en ce qu'**il empêche la rotation de la vis (7), engendrée par la force axiale appliquée par la charge (17) sur la vis (7), tendant à visser la vis (7) dans l'écrou (8) immobile, Jusqu'à ce que le système de friction (3) glisse et désolidarise la vis (7) de ladite première pièce (1) reliée à la charge (17), de sorte que la force statique supportée par le vérin est limitée quand celui-ci n'actionne pas la charge (17).

4. Dispositif de limitation de force pour vérin électrique linéaire à système vis-écrou adapté pour actionner en translation une charge (17), **caractérisé en ce que** le système vis écrou soit réversible et que le dispositif comprend une première pièce (1) solidaire de la charge (17) et une deuxième pièce (2) solidaire de l'écrou du vérin, ladite première pièce (1) et ladite deuxième pièce (2) étant montées pour pouvoir tourner l'une par rapport à l'autre sur un même axe, ainsi qu'un système de friction (3) disposé entre ladite première pièce (1) et ladite deuxième pièce (2) de manière à assurer la liaison de ladite première pièce (1) et de ladite deuxième pièce (2) au repos mais à glisser à partir d'un certain couple de torsion engendré par le fait que ce système de friction (3) empêche la rotation de l'écrou.

5. Dispositif selon la revendication 4, **caractérisé en ce qu'**il empêche la rotation de l'écrou par rapport à la charge (17), engendrée par le couple de frottement entre l'écrou et la vis, jusqu'à ce que le système de friction glisse et désolidarise l'écrou de ladite première pièce (1) solidaire de la charge (17), de sorte que la force du vérin est limitée quand celui-ci actionne la charge (17).

6. Dispositif selon la revendication 4, **caractérisé en ce qu'**il empêche la rotation de l'écrou, engendrée par la force axiale appliquée par la charge (17) sur l'écrou, tendant à visser l'écrou sur la vis immobile, Jusqu'à ce que le système de friction (3) glisse et désolidarise l'écrou de ladite première pièce (1) reliée à la charge (17), de sorte que la force statique supportée par le vérin est limitée quand celui-ci n'actionne pas la charge (17).

7. Dispositif selon l'une quelconque des revendications 1 à 6, **caractérisé en ce que** le système de friction (3) est composé d'une première pièce (1) comportant des encoches. (28) et d'une deuxième pièce (2) possédant des trous borgnes dans lesquels coulisse une bille (19) ou un coin poussés par un ressort (20) et adaptés pour venir se loger dans les encoches, les billes (19) ou les coins tendant à s'échapper des encoches (28) quand un couple de torsion suffisant est appliqué entre ladite première pièce (1) et ladite deuxième pièce (2).

8. Dispositif selon l'une quelconque des revendications 1 à 6, **caractérisé en ce que** le système de friction est composé de deux disques de frottement (24, 25) plaqués l'un contre l'autre par un ressort (26).

9. Dispositif selon la revendication 7, **caractérisé en ce que** ladite deuxième pièce (2) comporte, pour au moins l'une des billes (19), un moyen de déplacement relatif de la bille tangentiellement par rapport à ladite deuxième pièce (2) dans un sens prédéterminé, ce moyen de déplacement relatif étant constitué par un logement (29) s'étendant dans ladite deuxième pièce (2) dans ledit sens prédéterminé et qui est adapté pour recevoir la bille (19) en relation d'engagement tout en restant enclenchée dans une encoche (28) quand une rotation relative entre ladite première pièce (1) et ladite deuxième pièce (2) provoquant un déplacement relatif de la bille (19) dans ledit sens prédéterminé commence à se produire, et ainsi interdire à la bille (19) de se déplacer radialement dans ladite deuxième pièce (2), de telle manière qu'une libre rotation relative entre ladite première pièce (1) et ladite deuxième pièce (2) soit alors empêchée, tandis qu'elle est possible par glissement entre ladite première partie (1) et ladite deuxième partie (2) à partir d'un certain couple de torsion quand elle tend à prolonger un déplacement relatif de la bille (19) dans le sens opposé audit sens prédéterminé.

10. Dispositif selon l'une quelconque des revendications 1 à 9, **caractérisé en ce que** ladite première pièce (1) et ladite deuxième pièce (2) sont concentriques et circulaires, au moins l'une constituant un capot de protection.

11. Dispositif selon l'une quelconque des revendications 1 à 10, **caractérisé en ce qu'**il comporte des butées de fin de course (13) adaptées pour fonctionner symétriquement autour de l'axe de la vis, ces butées (13) commandant des détecteurs situés dans le corps (15) du vérin qui génèrent un signal utilisé par exemple pour commander l'arrêt d'un moteur (11) quand une fin de course est atteinte.

12. Dispositif selon la revendication 11, **caractérisé en ce que** les butées de fin de course (13) comprennent chacune un aimant annulaire (16) à champ axial qui commande sans contact un détecteur (14) sensible au champ magnétique.

13. Dispositif selon l'une quelconque des revendications 11 et 12, **caractérisé en ce que** les butées de fin de course (13) sont composées chacune d'une pièce mécanique circulaire commandant un détecteur optique, pneumatique ou à rupture électrique.

14. Vérin linéaire à système vis-écrou réversible, **caractérisé en ce qu'**il est équipé d'un dispositif selon l'une quelconque des revendications précédentes.

## Patentansprüche

1. Vorrichtung zur Kraftbegrenzung für einen elektrischen Linearantrieb mit Schraubenspindel-/Muttersystem, der bzw. das dazu eingerichtet ist, eine Last (17) in Translationsbewegung zu versetzen, **dadurch gekennzeichnet, daß** das Schraubenspindel-/Muttersystem umkehrbar ist, und daß die Vorrichtung ein erstes Stück (1), das fest mit der Last (17) verbunden ist, und ein zweites Stück (2) aufweist, das fest mit der Schraubenspindel (7) des Antriebs verbunden ist, wobei das genannte erste Stück (1) und das genannte zweite Stück (2) so angebracht sind, daß sie sich das eine bezüglich des anderen auf ein und derselben Achse drehen können, sowie ein Reibungssystem (3), das zwischen dem genannten ersten Stück (1) und dem genannten zweiten Stück (2) derart angeordnet ist, daß die Verbindung des genannten ersten Stücks (1) und des genannten zweiten Stücks (2) in Ruhe sichergestellt ist, aber von einem bestimmten Drehmoment ab durchrutscht, das durch die Tatsache verursacht wird, daß dieses Reibungssystem (3) die Drehung der Schraubenspindel verhindert.

2. Vorrichtung nach Anspruch 1, **dadurch gekennzeichnet, daß** sie die Drehung der Schraubenspindel (7) bezüglich der Last (17) verhindert, herbeigeführt durch das Reibungsmoment zwischen der Schraubenspindel (7) und der Mutter (8), bis das Reibungssystem durchrutscht und die feste Verbindung der Schraubenspindel (7) von dem genannten, ersten Stück (1) löst, das mit der Last (17) fest verbunden ist, so daß die Kraft des Antriebs begrenzt ist, wenn dieser die Last (17) versetzt.

3. Vorrichtung nach Anspruch 1, **dadurch gekennzeichnet, daß** sie die Drehung der Schraubenspindel (7) verhindert, die von der Axialkraft verursacht wird, die durch die Last (17) auf die Schraubenspindel (7) aufgebracht wird und danach trachtet, die Schraubenspindel (7) in der unbeweglichen Mutter (8) schraubend zu drehen, bis das Reibungssystem (3) durchrutscht und die feste Verbindung der Schraubenspindel (7) von dem genannten, ersten Stück (1) löst, das mit der Last (17) verbunden ist, so daß die statische Kraft, die vom Antrieb abgestützt wird, begrenzt ist, wenn dieser nicht die Last (17) versetzt.

4. Vorrichtung zum Begrenzen der Kraft für einen elektrischen Linearantrieb mit Schraubenspindel-/Muttersystem, der bzw. das dazu eingerichtet ist, eine Last (17) in Translationsbewegung zu versetzen, **dadurch gekennzeichnet, daß** das Schraubenspindel-/Muttersystem umkehrbar ist, und daß die Vorrichtung ein erstes Stück (1), das fest mit der Last (17) verbunden ist, und ein zweites Stück (2) aufweist, das fest mit der Mutter des Antriebs verbunden ist, wobei das genannte erste Stück (1) und das genannte zweite Stück (2) so angebracht sind, daß sie sich das eine bezüglich des anderen auf ein und derselben Achse drehen können, sowie ein Reibungssystem (3), das zwischen dem genannten ersten Stück (1) und dem genannten zweiten Stück (2) derart angeordnet ist, daß die Verbindung des genannten ersten Stücks (1) und des genannten zweiten Stücks (2) in Ruhe sichergestellt ist, aber von einem bestimmten Drehmoment ab durchrutscht, das durch die Tatsache verursacht wird, daß dieses Reibungssystem (3) die Drehung der Mutter verhindert.

5. Vorrichtung nach Anspruch 4, **dadurch gekennzeichnet, daß** sie die Drehung der Mutter bezüglich der Last (17) verhindert, herbeigeführt durch das Reibungsmoment zwischen der Schraubenspindel und der Mutter, bis das Reibungssystem durchrutscht und die feste Verbindung der Mutter von dem genannten, ersten Stück (1) löst, das mit der Last (17) fest verbunden ist, so daß die Kraft des Antriebs begrenzt ist, wenn dieser die Last (17) versetzt.

6. Vorrichtung nach Anspruch 4, **dadurch gekennzeichnet, daß** sie die Drehung der Mutter verhindert, die von der Axialkraft verursacht wird, die durch die Axialkraft der Last (17) auf die Mutter aufgebracht wird und danach trachtet, die Mutter auf der unbeweglichen Schraubenspindel schraubend zu drehen, bis das Reibungssystem (3) durchrutscht und die feste Verbindung der Mutter von dem genannten, ersten Stück (1) löst, das mit der Last (17) verbunden ist, so daß die statische Kraft, die vom Antrieb abgestützt wird, begrenzt ist, wenn dieser nicht die Last (17) versetzt.

7. Vorrichtung nach irgendeinem der Ansprüche 1 bis 6, **dadurch gekennzeichnet, daß** das Reibungssystem (3) aus einem ersten Stück (1), das Kerben (28) aufweist, und einem zweiten Stück (2) zusammengesetzt ist, das Sackbohrungen besitzt, in denen eine Kugel (19) oder ein Keil verschieblich untergebracht ist, die bzw. der von einer Feder (20) belastet wird und dazu eingerichtet ist, zum Sitz in den Kerben zu gelangen, wobei die Kugeln (19) oder Keile danach trachten, sich aus den Kerben (28) zurückzuziehen, wenn ein ausreichendes Drehmoment zwischen dem ersten Stück (1) und dem zweiten Stück (2) angelegt wird.

8. Vorrichtung nach irgendeinem der Ansprüche 1 bis 6, **dadurch gekennzeichnet, daß** das Reibungssystem aus zwei Reibscheiben (24, 25) zusammengesetzt ist, die durch eine Feder (26) aneinander angedrückt werden.

9. Vorrichtung nach Anspruch 7, **dadurch gekennzeichnet, daß** das genannte zweite Stück (2) für mindestens eine der Kugeln (19) ein Mittel zur relativen Verlagerung der Kugel in tangentialer Richtung bezüglich des genannten zweiten Stükkes (2) in einer vorbestimmten Richtung aufweist, wobei dieses Mittel zur Relativverlagerung durch einen Sitz (29) gebildet ist, der sich im genannten zweiten Stück (2) in der genannten, vorbestimmten Richtung erstreckt und der dazu eingerichtet ist, die Kugel (19) in der Eingriffszuordnung aufzunehmen, während sie völlig in einer Kerbe (28) verrastet bleibt, wenn eine Relativdrehung zwischen dem genannten ersten Stück (1) und dem genannten zweiten Stück (2), die eine relative Verlagerung der Kugel (19) in der genannten, vorbestimmten Richtung hervorruft, zu erfolgen beginnt, und es so unterbindet, daß sich die Kugel (19) im genannten, zweiten Stück (2) radial verlagert, und zwar auf eine solche Weise, daß eine freie Relativdrehung zwischen dem genannten ersten Stück (1) und dem genannten zweiten Stück (2) dann verhindert ist, während sie durch Verrutschen zwischen dem genannten ersten Stück (1) und dem genannten zweiten Stück (2) von einem bestimmten Torsionsmoment an möglich ist, wenn sie danach trachtet, eine relative Verlagerung der Kugel (19) in der Richtung zu verlängern, die der genannten, vorbestimmtem Richtung entgegengesetzt ist.

10. Vorrichtung nach irgendeinem der Ansprüche 1 bis 9, **dadurch gekennzeichnet, daß** das genannte erste Stück (1) und das genannte zweite Stück (2) konzentrisch und rund sind, wobei mindestens das eine eine Schutzhaube bildet.

11. Vorrichtung nach irgendeinem der Ansprüche 1 bis 10, **dadurch gekennzeichnet, daß** sie Bewegungsweg-Endanschläge (13) aufweist, die dazu eingerichtet sind, um symmetrisch um die Achse der Schraubenspindel wirksam zu sein, wobei diese Anschläge (13) Meßfühler steuern, die im Körper (15) des Antriebs sitzen und ein Signal erzeugen, das zum Beispiel verwendet wird, um den Halt eines Motors (11) zu befehlen, wenn ein Ende des Bewegungsweges erreicht ist.

12. Vorrichtung nach Anspruch 11, **dadurch gekennzeichnet, daß** jeder der Bewegungsweg-Endanschläge (13) einen Ringmagnet (16) mit axialem Feld aufweist, der einen Meßfühler (14), der auf ein Magnetfeld anspricht, berührungsfrei steuert.

13. Vorrichtung nach irgendeinem der Ansprüche 11 und 12, **dadurch gekennzeichnet, daß** jeder der Bewegungsweg-Endanschläge (13) aus einem kreisförmigen, mechanischen Stück zusammengesetzt ist, das einen optischen Meßfühler, pneumatischen Meßfühler oder elektrischen Unterbrechungsmeßfühler steuert.

14. Linearantrieb mit umkehrbarem Schraubenspindel-/Muttersystem, **dadurch gekennzeichnet, daß** er mit einer Vorrichtung nach irgendeinem der vorangehenden Ansprüche ausgestattet ist.

## Claims

1. A force limiter device for a linear electric jack comprising a screw/nut system adapted to move a load (17) in translation, **characterized in that** the screw/nut system is reversible and the device comprises a first piece (1) secured to the load (17) and a second piece (2) secured to the screw (7) of the jack, said first piece (1) and said second piece (2) being mounted to be capable of turning relative to each other about a common axis, together with a friction system (3) disposed between said first piece (1) and said second piece (2) so as to connect said first piece (1) and said second piece (2) together at rest, but so as to slip from a certain value of torque generated by the fact that the friction system (3) prevents the screw from turning.

2. A device according to claim 1, **characterized in that** it prevents the screw (7) from turning relative to the load (17) by means of the friction torque between the screw (7) and the nut (8) until the friction system slips and releases the screw (7) from said first piece (1) secured to the load (17), such that the force of the jack is limited when it drives the load (17).

3. A device according to claim 1, **characterized in that** it prevents the screw (7) from turning under drive from the axial force applied by the load (17) on the screw (7) tending to screw the screw (7) into the stationary nut (8) until the friction system (3) slips and releases the screw (7) from said first piece (1) connected to the load (17), such that the static force supported by the jack is limited when the jack is not driving the load (17).

4. A force limiter device for a linear electric jack comprising a screw/nut system adapted to move a load (17) in translation, **characterized in that** the screw/nut system is reversible and the device comprises a first piece (1) secured to the load (17) and a second piece (2) secured to the nut of the jack, said first piece (1) and said second piece (2) being mounted to be capable of turning relative to each other about a common axis, together with a friction system (3) disposed between said first piece (1) and said second piece (2) so as to connect said first piece (1) and said second piece (2) together at rest, but so as to slip from a certain value of torque generated by the fact that the friction system (3) prevents the nut from turning.

5. A device according to claim 4, **characterized in that** it prevents the nut from turning relative to the load (17) by means of the friction torque between the nut and the screw until the friction system slips and releases the nut from said first piece (1) secured to the load (17), such that the force of the jack is limited when it drives the load (17).

6. A device according to claim 4, **characterized in that** it prevents the nut from turning under drive from the axial force applied by the load (17) on the nut tending to screw the nut on the stationary screw until the friction system (3) slips and releases the nut from said first piece (1) connected to the load (17), such that the static force supported by the jack is limited when the jack is not driving the load (17).

7. A device according to any one of claims 1 to 6, **characterized in that** the friction system (3) comprises a first piece (1) having notches (28) and a second piece (2) possessing blind holes in which respective balls (19) or chocks slide under thrust from respective springs (20), and adapted to be received in the notches, the balls (19) or the chocks tending to escape from the notches (28) when sufficient torque is applied between said first piece (1) and said second piece (2).

8. A device according to any one of claims 1 to 6, **characterized in that** the friction system is made up of two friction disks (24, 25) pressed one against the other by a spring (26).

9. A device according to claim 7, **characterized in that** said second piece (2) includes, for at least one of the balls (19), means for relative displacement of the ball tangentially relative to said second piece (2) in a predetermined direction, said relative displacement means being constituted by a housing (29) extending in said second piece (2) in said predetermined direction and which is adapted to receive the ball (19) in an engagement relationship while remaining received in a notch (28) when relative turning between said first piece (1) and said second piece (2) begins to occur, causing the ball (19) to move in said predetermined direction, thereby preventing the ball (19) from moving radially in said second piece (2), so as to prevent free relative turning between said first piece (1) and said second piece (2), while relative turning is possible due to slip between said first portion (1) and said second portion (2) beyond a certain level of torque when said turning tends to extend relative displacement of the ball (19) in a direction opposite to said predetermined direction.

10. A device according to any one of claims 1 to 9, **characterized in that** said first piece (1) and said second piece (2) are concentric and circular, at least one of them constituting a protective cap.

11. A device according to any one of claims 1 to 10, **characterized in that** it includes end-of-stroke abutments (13) adapted to operate symmetrically about the axis of the screw, said abutments (13) controlling detectors situated in the body (15) of the jack to generate a signal used, for example, to cause a motor (11) to be stopped when an end of the stroke is reached.

12. A device according to claim 11, **characterized in that** each of the end-of-stroke abutments (13) comprises an annular magnet (16) of axial field which controls a detector (14) that is responsive to the magnetic field, without contact being made.

13. A device according to claim 11 or claim 12, **characterized in that** each of the end-of-stroke abutments (13) is constituted by a circular mechanical piece controlling an optical or pneumatic detector, or an electrical interrupter switch.

14. A linear jack having a reversible screw/nut system, the jack being **characterized in that** it is fitted with a device according to any preceding claim.
